# EUROPÄISCHE PATENTSCHRIFT

(11) **EP 3 423 403 B1**
(45) Veröffentlichungstag und Bekanntmachung des Hinweises auf die Patenterteilung: **15.06.2022**
(21) Anmeldenummer: 17710838.8
(22) Anmeldetag: 28.02.2017
(51) Int. Cl.: C01B 33/02, C01B 32/00, C01B 32/956, H01M 4/1395, H01M 4/36, H01M 4/38, H01M 4/62, H01M 10/052

(54) **VERFAHREN ZUR HERSTELLUNG EINES SILICIUM-KOHLENSTOFF-KOMPOSITES**
METHOD FOR PRODUCING A SILICON-CARBON COMPOSITE
PROCÉDÉ DE PRODUCTION D'UN COMPOSITE DE SILICIUM-CARBONE

(30) Priorität: 01.03.2016 DE 102016203324
(43) Veröffentlichungstag der Anmeldung: 09.01.2019
(73) Patentinhaber: Evonik Operations GmbH, 45128 Essen (DE)
(72) Erfinder: LYUBINA, Julia, 63457 Hanau (DE); KRÖLL, Michael, 59399 Olfen (DE)
(74) Vertreter: Evonik Patent Association
(86) Internationale Anmeldenummer: PCT/EP2017/054590
(87) Internationale Veröffentlichungsnummer: WO 2017/148911

(56) Entgegenhaltungen:
- WO-A1-88/04333
- JP-A- 2012 142 597
- REDONDAS X ET AL: "Influence of the substrate temperature on silicon-carbon thin films deposited from SiH"4 and C"2H"4 by excimer lamp-CVD", THIN SOLID FILMS, ELSEVIER, AMSTERDAM, NL, Bd. 317, Nr. 1-2, 1. April 1998 (1998-04-01), Seiten 112-115, XP004147622, ISSN: 0040-6090, DOI: 10.1016/S0040-6090(97)00601-9
- JULIEN SOURICE ET AL: "One-Step Synthesis of Si@C Nanoparticles by Laser Pyrolysis: High-Capacity Anode Material for Lithium-Ion Batteries", ACS APPLIED MATERIALS AND INTERFACES, Bd. 7, Nr. 12, 1. April 2015 (2015-04-01), Seiten 6637-6644, XP055365553, US ISSN: 1944-8244, DOI: 10.1021/am5089742
- GUANGYU ZHAO ET AL: "High storage performance of core shell Si@C nanoparticles as lithium ion battery anodematerial", MATERIALS LETTERS, ELSEVIER, AMSTERDAM, NL, Bd. 96, 16. Januar 2013 (2013-01-16), Seiten 170-173, XP028522909, ISSN: 0167-577X, DOI: 10.1016/J.MATLET.2013.01.073 [gefunden am 2013-01-31]

## Beschreibung

Die Erfindung betrifft ein Verfahren zur Herstellung eines Silicium-Kohlenstoff-Komposites.

Silicium-Komposite haben großes Potential als Anodenmaterial in Lithiumionenbatterien. Aufgrund der großen Volumenänderung des Siliciums beim wiederholten Laden/Entladen sind diese Silicium-Komposite als Anodenmaterial nicht brauchbar.

Es wurden daher intensive Anstrengungen unternommen die Zyklenstabilität durch Verwendung von Kompositen von Silicium-Graphit, Graphen-Nanosilicium, Silicium-Kohlenstoff-Nanoröhrchen, Silicium-Kohlenstoff-Nanodrähte, Silicium umhüllter Kohlenstoff und Kohlenstoff umhülltes Silicium zu verbessern. Methoden zur Herstellung dieser Komposite sind beispielsweise Pyrolyse, Vermahlung oder CVD-Prozesse. (Zhang et al., Nanoscale, 5 (2013) 5384 und Kasavajjula et al., Journal Power Sources 163 (2007) 1003).

Magasinki et al., Nat. Mater. 9 (2010) 353, beschreiben die Herstellung eines Silicium-Kohlenstoff-Komposites ausgehend von Monosilan und Propen in einem Zweistufen-CVD-Prozess. In einem ersten Schritt wird Silicium auf einem Träger aufgebracht, indem man im Vakuum ein SiH₄/He-Gemisch bei 700°C in einen Rohrreaktor einbringt. Nachfolgend wird auf dieses Silicium Kohlenstoff aufgebracht, indem man unter den oben genannten Bedingungen Propen in den Rohrreaktor einbringt.

In WO2011/006698 wird ein Verfahren zur Herstellung eines nanostrukturierten Silicium-Kohlenstoff-Komposites offenbart, bei dem zu einem kohlenstoffhaltigen Gemisch, welches durch Reaktion einer hydroxyaromatischen Verbindung mit einem Aldehyden hergestellt wird, ein submikrones Siliciumpulver gibt und das Gemisch bei 500 bis 1200 °C carbonisiert.

Eine weitere Variante ist nach Wang et al., Electrochem. Commun. 6 (2004), 689, die Zugabe von nanokristallinem Siliciumpulver zu einer gelierenden Resorcin/Formaldehyd-Mischung, die für 10 Stunden bei 85°C aushärtet. Diese Mischung ist ein kompakter Block, der bei 650°C zu einem Silicium-Kohlenstoff-Komposit mit 40 % Kohlenstoff umgesetzt wird.

In EP-A-2782167 wird ein Verfahren zur Herstellung eines Si/C-Komposites offenbart, bei dem Silicium und Lignin bei wenigstens 400°C in einer inerten Gasatmosphäre zur Reaktion gebracht werden.

In US2009029256 wird ein Verfahren zur Herstellung eines Si / Kohlenstoff-Komposites offenbart, bei dem man eine Mischung aus Erdalkalimetall und der Kieselsäure / Kohlenstoff-Komposit in einer inerten Atmosphäre erhitzt.

In WO 88/04333 wird die Herstellung vom kristallinem Siliciumkarbid versucht, wobei in einem Reaktor bei 850 °C einem Ethylen- oder Methan-Gasstrom SiH₄ zugesetzt und der Versuch nach 100 min beendet wird. Das pulverförmige Reaktionsprodukt wird von den gasförmigen Stoffen abgetrennt.

Die im Stand der Technik bekannten Verfahren sind oft mehrstufig und durch die Wahl der Einsatzstoffe nur zur Herstellung labortypischer Mengen geeignet. Die Aufgabe der vorliegenden Erfindung war es daher ein Verfahren bereitzustellen, welches in einer Reaktionsstufe unter Verwendung großtechnisch verfügbarer Einsatzstoffe die Herstellung eines Anodenmaterials auf Basis von Silicium und Kohlenstoff ermöglicht.

Gegenstand der Erfindung ist ein Verfahren zur Herstellung eines Silicium-Kohlenstoff-Kompositpulvers, bei dem man
a) einen Gasstrom A enthaltend wenigstens eine Ausgangsverbindung des Siliciums ausgewählt aus der Gruppe bestehend aus SiH₄, Si₂H₆ und Si₃H₈, und
b) einen Gasstrom B enthaltend wenigstens eine Ausgangsverbindung des Kohlenstoffes ausgewählt aus der Gruppe bestehend aus Methan, Ethan, Propan, Äthylen und Acetylen,
in einem Heißwandreaktor, bevorzugt in einem rohrförmigen Heißwandreaktor, wobei der Heißwandreaktor laminar durchströmt wird, bei einer Temperatur von weniger als 900°C, bevorzugt 400 - 750°C, zur Reaktion bringt, das Reaktionsgemisch abkühlt oder abkühlen lässt und das pulverförmige Reaktionsprodukt von gasförmigen Stoffen abtrennt.

Als Silicium-Kohlenstoff-Kompositpulver wird ein Pulver bezeichnet, welches mindestens eine überwiegend Silicium enthaltende Phase und mindestens eine überwiegend Kohlenstoff enthaltende Phase umfasst.

Dabei kann man den Gasstrom A und der Gasstrom B zeitgleich, getrennt voneinander oder als ein Gemisch von Gasstrom A und Gasstrom B, in den Heißwandreaktor einbringen.

Dabei kann es auch vorteilhaft sein den Gasstrom B zu einem späteren Zeitpunkt als den Gasstrom A in den Heißwandreaktor einzubringen.

Das Verhältnis Silicium-Ausgangsverbindung/Kohlenstoff-Ausgangsverbindung wird bevorzugt so gewählt, dass der Volumenanteil Si/C im Silicium-Kohlenstoff-Kompositpulver 30:1 - 1:30, besonders bevorzugt 20:1 - 1:1, beträgt.

Das erfindungsgemäße Verfahren liefert die besten Ergebnisse, wenn die Ausgangsverbindung des Siliciums SiH₄ und die Ausgangsverbindung des Kohlenstoffes Acetylen ist.

Die Ausgangsverbindungen können auch als Gemisch mit inerten Gasen, ausgewählt aus der Gruppe bestehend aus Argon und Helium, und/oder Wasserstoff in den Heißwandreaktor eingebracht werden.

In einem speziellen Silicium-Kohlenstoff-Kompositpulver mit einem Si/C-Volumenanteil von 20:1 - 1:10, welches Siliciumpartikel mit einem mittleren Durchmesser von 300 nm oder weniger, bevorzugt 50 - 200 nm enthält, wobei die Oberfläche der Siliciumpartikel mit einer amorphen, kohlenstoffhaltigen Schicht mit einer mittleren Schichtdicke von weniger als 200 nm, bevorzugt 10 - 100 nm, wenigstens teilweise, bevorzugt vollständig umhüllt ist, können die Siliciumpartikel in amorpher Form oder als Mischung von amorphem Silicium und Siliciumkristalliten ungeordneter Ausrichtung mit einem Durchmesser von ca. 5 - 15 nm vorliegen. Bevorzugt ist ein hoher amorpher Anteil.

Die amorphe, kohlenstoffhaltige Schicht kann aliphatische, aromatische und/oder graphitische Spezies umfassen.

Als amorph im Rahmen der Erfindung wird eine Phase bezeichnet, deren Röntgendiffraktogramm mindestens ein breites Maximum, ein sogenanntes amorphes Halo, aufweist.

Das spezielle Silicium-Kohlenstoff-Kompositpulver kann als Bestandteil der Anode einer Lithiumionenbatterie verwendet werden.

### Beispiele

### Beispiel 1

20 Vol.-% SiH₄ und 3 Vol.-% Acetylen werden als homogene Mischung über eine Düse in den Kern eines rohrförmigen Heißwandreaktors eingeleitet. Zusätzlich wird Argon als Schleiergas eingesetzt. Der Heißwandreaktor wird laminar durchströmt. Es wird eine Temperatur von 700 °C an der Reaktoraußenwand gemessen. Der pulverförmige Feststoff wird in einem Filter von gasförmigen Stoffen getrennt und über ein Schleusensystem unter inerten Bedingungen abgefüllt.

Die Partikelgröße und Partikelmorphologie des pulverförmigen Feststoffes werden mittels Transmissionselektronenmikroskopie (TEM) untersucht. Die mittlere Partikelgröße ist 260 nm. Die Partikel haben eine nahezu sphärische Form.

Mittels energiedispersiver Röntgenanalyse (EDX) im TEM wird der Silicium- und Kohlenstoffgehalt an ausgewählten Stellen gemessen. Am Partikelrand wird ein hoher Kohlenstoffgehalt von 90 - 95 At.-% gemessen. Die Partikelmitte weist ein Verhältnis der Atomkonzentration Si:C von 60:40 auf. Es sei darauf hingewiesen, dass bei der Aufnahme des EDX Spektrums der Partikel ein Signal sowohl des Partikelkerns als auch der Partikeloberfläche gemessen wird. Der hohe Kohlenstoffgehalt am Partikelrand und der niedrigere Kohlenstoffgehalt bei der EDX-Messung in der Partikelmitte weisen auf die Bildung eines Silicium-Kohlenstoff-Kompositpulvers hin, bei dem die Oberfläche der Partikel mit einer kohlenstoffhaltigen Schicht umhüllt ist.

Aus der Rietveld-Verfeinerung der Röntgendiffraktogramme lassen sich die Anteile der Phasen im pulverförmigen Feststoff berechnen. Laut der Rietveld-Verfeinerung enthält der pulverförmige Feststoff überwiegend eine amorphe Phase (85 Vol.-%). Die amorphe Phase wird durch drei breite Reflexe charakterisiert. Diese breiten Reflexe, auch Halo genannt, sind charakteristisch für eine amorphe Phase. Es werden zusätzlich zur amorphen Phase 15 Vol.-% nanokristallines Silicium gefunden.

### Beispiel 2

20 Vol.-% SiH₄ und 3,2 Vol.-% Ethylen werden als homogene Mischung über eine Düse in den Kern eines rohrförmigen Heißwandreaktors eingeleitet. Zusätzlich wird Argon als Schleiergas eingesetzt. Der Heißwandreaktor wird laminar durchströmt. Es wird eine Temperatur von 650 °C an der Reaktoraußenwand gemessen. Der pulverförmige Feststoff wird in einem Filter von gasförmigen Stoffen getrennt und über ein Schleusensystem unter inerten Bedingungen abgefüllt.

Die Partikelgröße und Partikelmorphologie des pulverförmigen Feststoffes werden mittels Transmissionselektronenmikroskopie (TEM) untersucht. Die mittlere Partikelgröße liegt bei 150 nm. Die Partikel haben eine nahezu sphärische Form.

Mittels energiedispersiver Röntgenanalyse (EDX) im TEM wird der Silicium- und Kohlenstoffgehalt an ausgewählten Stellen gemessen. Am Partikelrand wird ein hoher Kohlenstoffgehalt von 80 - 83 At.-% gemessen. Die Partikelmitte weist ein Verhältnis der Atomkonzentration Si:C von 35:65 auf. Der hohe Kohlenstoffgehalt am Partikelrand und der niedrigere Kohlenstoffgehalt bei EDX-Messung in der Partikelmitte weisen auf die Bildung eines Silicium-Kohlenstoff-Kompositpulvers hin, bei dem die Oberfläche der Partikel mit einer kohlenstoffhaltigen Schicht umhüllt ist.

Aus der Rietveld-Verfeinerung der Röntgendiffraktogramme lassen sich die Anteile der Phasen im pulverförmigen Feststoff berechnen. Laut der Rietveld-Verfeinerung enthält der pulverförmige Feststoff überwiegend eine amorphe Si Phase (96 Vol.-%). Die amorphe Phase wird durch drei breite Reflexe charakterisiert. Diese breiten Reflexe, auch Halo genannt, sind charakteristisch für eine amorphe Phase. Es werden zusätzlich 4 Vol.-% nanokristallines Silicium gefunden.

### Beispiel 3

20 Vol.-% SiH₄ und 3,1 Vol.-% Ethan werden als homogene Mischung über eine Düse in den Kern eines rohrförmigen Heißwandreaktors eingeleitet. Zusätzlich wird Argon als Schleiergas eingesetzt. Der Heißwandreaktor wird laminar durchströmt. Es wird eine Temperatur von 650 °C an der Reaktoraußenwand gemessen. Der pulverförmige Feststoff wird in einem Filter von gasförmigen Stoffen getrennt und über ein Schleusensystem unter inerten Bedingungen abgefüllt.

Die Partikelgröße und Partikelmorphologie des pulverförmigen Feststoffes werden mittels

Transmissionselektronenmikroskopie (TEM) untersucht. Die mittlere Partikelgröße ist 210 nm. Die Partikel haben eine nahezu sphärische Form. Mittels energiedispersiver Röntgenanalyse (EDX) im TEM wird der Silicium- und Kohlenstoffgehalt an ausgewählten Stellen gemessen. Am Partikelrand wird ein hoher Kohlenstoffgehalt von 84 - 92 At.-% gemessen. Die Partikelmitte weist ein Verhältnis der Atomkonzentration Si:C von 40:60 auf. Der hohe Kohlenstoffgehalt am Partikelrand und der niedrigere Kohlenstoffgehalt bei EDX-Messung in der Partikelmitte weisen auf die Bildung eines Silicium-Kohlenstoff-Kompositpulvers hin, bei dem die Oberfläche der Partikel mit einer kohlenstoffhaltigen Schicht umhüllt ist.

Aus der Rietveld-Verfeinerung der Röntgendiffraktogramme lassen sich die Anteile der Phasen im pulverförmigen Feststoff berechnen. Laut der Rietveld-Verfeinerung enthält der pulverförmige Feststoff überwiegend eine amorphe Si Phase (97 Vol.-%). Die amorphe Phase wird durch drei breite Reflexe charakterisiert. Diese breiten Reflexe, auch Halo genannt, sind charakteristisch für eine amorphe Phase. Es werden zusätzlich 3 Vol.-% nanokristallines Silicium gefunden.

### Beispiel 4

20 Vol.-% SiH₄ und 3,2 Vol.-% Propan werden als homogene Mischung über eine Düse in den Kern eines rohrförmigen Heißwandreaktors eingeleitet. Zusätzlich wird Argon als Schleiergas eingesetzt. Der Heißwandreaktor wird laminar durchströmt. Es wird eine Temperatur von 650 °C an der Reaktoraußenwand gemessen. Der pulverförmige Feststoff wird in einem Filter von gasförmigen Stoffen getrennt und über ein Schleusensystem unter inerten Bedingungen abgefüllt.

Die Partikelgröße und Partikelmorphologie des pulverförmigen Feststoffes werden mittels Transmissionselektronenmikroskopie (TEM) untersucht. Die mittlere Partikelgröße liegt bei 200 nm. Die Partikel haben eine nahezu sphärische Form.

Mittels energiedispersiver Röntgenanalyse (EDX) im TEM wird der Silicium- und Kohlenstoffgehalt an ausgewählten Stellen gemessen. Am Partikelrand wird ein hoher Kohlenstoffgehalt von 97 At.-% gemessen. Die Partikelmitte weist ein Verhältnis der Atomkonzentration Si:C von 53:47 auf. Der hohe Kohlenstoffgehalt am Partikelrand und der niedrigere Kohlenstoffgehalt bei EDX-Messung in der Partikelmitte weisen auf die Bildung eines Silicium-Kohlenstoff-Kompositpulvers hin, bei dem die Oberfläche der Partikel mit einer kohlenstoffhaltigen Schicht umhüllt ist.

Aus der Rietveld-Verfeinerung der Röntgendiffraktogramme lassen sich die Anteile der Phasen im pulverförmigen Feststoff berechnen. Laut der Rietveld-Verfeinerung enthält der pulverförmige Feststoff überwiegend eine amorphe Si Phase (94 Vol.-%). Die amorphe Phase wird durch drei breite Reflexe charakterisiert. Diese breiten Reflexe, auch Halo genannt, sind charakteristisch für eine amorphe Phase. Es werden zusätzlich 6 Vol.-% nanokristallines Silicium beobachtet.

### Beispiel 5

20 Vol.-% SiH₄ und 6,3 Vol.-% Methan werden als homogene Mischung über eine Düse in den Kern eines rohrförmigen Heißwandreaktors eingeleitet. Zusätzlich wird eine Mischung vom Argon und Wasserstoff als Schleiergas eingesetzt. Der Heißwandreaktor wird laminar durchströmt. Es wird eine Temperatur von 650 °C an der Reaktoraußenwand gemessen. Der pulverförmige Feststoff wird in einem Filter von gasförmigen Stoffen getrennt und über ein Schleusensystem unter inerten Bedingungen abgefüllt.

Die Partikelgröße und Partikelmorphologie des pulverförmigen Feststoffes werden mittels Transmissionselektronenmikroskopie (TEM) untersucht. Die mittlere Partikelgröße ist 195 nm. Die Partikel haben eine nahezu sphärische Form.

Die Siliciumpartikel sind teilweise mit einer kohlenstoffhaltigen Lage umhüllt.

Aus der Rietveld-Verfeinerung der Röntgendiffraktogramme lassen sich die Anteile der Phasen im pulverförmigen Feststoff berechnen. Laut der Rietveld-Verfeinerung enthält der pulverförmige Feststoff überwiegend eine amorphe Si Phase (93 Vol.-%). Die amorphe Phase wird durch drei breite Reflexe charakterisiert. Diese breiten Reflexe, auch Halo genannt, sind charakteristisch für eine amorphe Phase. Es werden zusätzlich 7 Vol.-% nanokristallines Silicium beobachtet.

### Beispiel 6

20 Vol.-% SiH₄ werden über eine Düse in den Heißwandreaktorkern eines rohrförmigen Heißwandreaktors und 3,5 Vol.-% Ethylen seitlich in diesen eingeleitet. Zusätzlich wird Argon als Schleiergas eingesetzt. Der Heißwandreaktor wird laminar durchströmt. Es wird eine Temperatur von 650 °C an der Reaktoraußenwand gemessen. Der pulverförmige Feststoff wird in einem Filter von gasförmigen Stoffen getrennt und über ein Schleusensystem unter inerten Bedingungen abgefüllt.

Die Partikelgröße und Partikelmorphologie des pulverförmigen Feststoffes werden mittels Transmissionselektronenmikroskopie (TEM) bestimmt. Die mittlere Partikelgröße liegt bei 170 nm. Die Partikel haben eine nahezu sphärische Form. Mittels energiedispersiver Röntgenanalyse (EDX) im TEM wird Silicium- und Kohlenstoffgehalt an ausgewählten Stellen gemessen. Am Partikelrand wird ein hoher Kohlenstoffgehalt von 99 At.-% gemessen. Die Partikelmitte weist ein Verhältnis der Atomkonzentration Si:C von 80:20 auf.

Aus der Rietveld-Verfeinerung der Röntgendiffraktogramme lassen sich die Anteile der Phasen im pulverförmigen Feststoff berechnen. Demnach enthält der pulverförmige Feststoff überwiegend eine amorphe Si Phase (85 Vol.-%). Die amorphe Phase wird durch drei breite Reflexe charakterisiert. Diese breiten Reflexe, auch Halo genannt, sind charakteristisch für eine amorphe Phase. Es werden zusätzlich 15 Vol.-% nanokristallines Silicium gefunden.

Einsatzstoffe und Stoffeigenschaften sind in der Tabelle zusammengefasst.

**Tabelle: Einsatzstoffe und Stoffeigenschaften der Silicium-Kohlenstoff-Kompositpulver.**

| **Beispiel** | **Einsatzstoffe** | **Mittlerer Partikeldurchmesser**^{a)} | **C Partikelrand**^{b)} | **Si:C Partikelmitte**^{b)} | **Amorpher Anteil**^{c)} |
|---|---|---|---|---|---|
| | Vol.-% | nm | At-% | At-% / At-% | % |
| **1** | 20 SiH₄ / 3 C₂H₂ | 260 | 90 - 95 | 1,5:1 | 85 |
| **2** | 20 SiH₄ / 3 C₂H₄ | 150 | 80 -83 | 1:1,85 | 96 |
| **3** | 20 SiH₄ / 3,1 C₂H₆ | 210 | 84-92 | 1:1,5 | 97 |
| **4** | 20 SiH₄ / 3,2 C₃H₈ | 200 | 97 | 1:1,13 | 94 |
| **5** | 20 SiH₄/ 6,3 CH₄ | 195 | - | - | 93 |
| **6** | 20 SiH₄ / 3,5 C₂H₄ | 170 | 99 | 4:1 | 85 |

| | | | | | |
|---|---|---|---|---|---|
| a) TEM; b) EDX; c) Röntgendiffraktometrie | | | | | |

## Patentansprüche

1. Verfahren zur Herstellung eines Silicium-Kohlenstoff-Kompositpulvers, **dadurch gekennzeichnet, dass** man
a) einen Gasstrom A enthaltend wenigstens eine Ausgangsverbindung des Siliciums ausgewählt aus der Gruppe bestehend aus SiH₄, Si₂H₆ und Si₃H₈, und
b) einen Gasstrom B enthaltend wenigstens eine Ausgangsverbindung des Kohlenstoffes ausgewählt aus der Gruppe bestehend aus Methan, Ethan, Propan, Äthylen und Acetylen,
in einem Heißwandreaktor bei einer Temperatur von weniger als 900°C, zur Reaktion bringt, wobei der Heißwandreaktor laminar durchströmt wird,
das Reaktionsgemisch abkühlt oder abkühlen lässt und das pulverförmige Reaktionsprodukt von gasförmigen Stoffen abtrennt.

2. Verfahren nach Anspruch 1, **dadurch gekennzeichnet, dass**
man den Gasstrom A und der Gasstrom B zeitgleich, getrennt oder als ein Gemisch von Gasstrom A und Gasstrom B, in den Heißwandreaktor einbringt.

3. Verfahren nach Anspruch 1, **dadurch gekennzeichnet, dass**
man den Gasstrom B zu einem späteren Zeitpunkt als den Gasstrom A in den Heißwandreaktor einbringt.

4. Verfahren nach den Ansprüchen 1 bis 3, **dadurch gekennzeichnet, dass**
das Verhältnis Silicium-Ausgangsverbindung/Kohlenstoff-Ausgangsverbindung so gewählt ist, dass der Volumenanteil Si/C in dem Silicium-Kohlenstoff-Kompositpulver 30:1 - 1:30 beträgt.

5. Verfahren nach den Ansprüchen 1 bis 4, **dadurch gekennzeichnet, dass**
die Ausgangsverbindung des Siliciums SiH₄ und die Ausgangsverbindung des Kohlenstoffes Acetylen ist.

6. Verfahren nach den Ansprüchen 1 bis 5, **dadurch gekennzeichnet, dass**
man inerte Gase ausgewählt aus der Gruppe bestehend aus Argon und Helium zusätzlich in den Heißwandreaktor einbringt.

## Claims

1. Process for producing a silicon-carbon composite powder, **characterized in that**
a) a gas stream A containing at least one starting compound of silicon selected from the group consisting of SiH₄, Si₂H₆ and Si₃H₈, and
b) a gas stream B containing at least one starting compound of carbon selected from the group consisting of methane, ethane, propane, ethylene and acetylene
are reacted in a hot wall reactor at a temperature of less than 900°C,
wherein there is a laminar flow through the hot wall reactor,
the reaction mixture is cooled or allowed to cool and the pulverulent reaction product is separated from gaseous materials.

2. Process according to Claim 1, **characterized in that** the gas stream A and the gas stream B is introduced into the hot wall reactor simultaneously, separately or as a mixture of gas stream A and gas stream B.

3. Process according to Claim 1, **characterized in that** gas stream B is introduced into the hot wall reactor at a later juncture than the gas stream A.

4. Process according to Claims 1 to 3, **characterized in that**
the silicon starting compound/carbon starting compound ratio is chosen such that the Si/C volume fraction in the silicon-carbon composite powder is 30:1-1:30.

5. Process according to Claims 1 to 4, **characterized in that**
the starting compound of silicon is SiH₄ and the starting compound of carbon is acetylene.

6. Process according to Claims 1 to 5, **characterized in that**
inert gases selected from the group consisting of argon and helium are additionally introduced into the hot wall reactor.

## Revendications

1. Procédé pour la production d'une poudre composite silicium-carbone, **caractérisé en ce qu'**on fait réagir
a) un flux de gaz A contenant au moins un composé du silicium de départ, choisi dans le groupe constitué par SiH₄, Si₂H₆ et Si₃H₈, et
b) un flux de gaz B contenant au moins un composé du carbone de départ choisi dans le groupe constitué par le méthane, l'éthane, le propane, l'éthylène et l'acétylène,
à une température de moins de 900 °C dans un réacteur à parois chaudes,
le réacteur à parois chaudes étant traversé par un flux laminaire,
on refroidit ou laisse refroidir le mélange réactionnel et on sépare le produit de réaction pulvérulent d'avec les substances gazeuses.

2. Procédé selon la revendication 1, **caractérisé en ce**
**qu'**on introduit dans le réacteur à parois chaudes le flux de gaz A et le flux de gaz B simultanément, séparément ou sous forme d'un mélange de flux de gaz A et flux de gaz B.

3. Procédé selon la revendication 1, **caractérisé en ce**
**qu'**on introduit dans le réacteur à parois chaudes le flux de gaz B à un moment plus tardif que le flux de gaz A.

4. Procédé selon les revendications 1 à 3, **caractérisé en ce que**
le rapport composé du silicium de départ/composé du carbone de départ est choisi de telle façon que le rapport en volume Si/C dans la poudre composite silicium-carbone vaut de 30:1 à 1:30.

5. Procédé selon les revendications 1 à 4, **caractérisé en ce que**
le composé du silicium de départ est SiH₄ et le composé du carbone de départ est l'acétylène.

6. Procédé selon les revendications 1 à 5, **caractérisé en ce**
**qu'**on introduit en outre dans le réacteur à parois chaudes des gaz inertes choisis dans le groupe constitué par l'argon et l'hélium.
